# EUROPEAN PATENT APPLICATION

(11) **EP 4 632 989 A1**
(43) Date of publication of application: **15.10.2025**
(21) Application number: 25164387.0
(22) Date of filing: 18.03.2025
(51) Int. Cl.: H02J 3/32, H02J 9/06

(54) **ENERGY STORAGE CABINET**

(30) Priority: 09.04.2024 CN 202420727586 U
(71) Applicant: Huawei Digital Power Technologies Co., Ltd., Shenzhen, Guangdong 518043 (CN)
(72) Inventor: WEN, Haishen, 518043 Shenzhen (CN); RUAN, Lixing, 518043 Shenzhen (CN); CHEN, Baoguo, 518043 Shenzhen (CN); GE, Rui, 518043 Shenzhen (CN); LIU, Jie, 518043 Shenzhen (CN)
(74) Representative: Gill Jennings & Every LLP

(57) **Abstract**

Embodiments of this application disclose an energy storage cabinet. An additional power converter is added between an energy storage apparatus and an air conditioning system, to meet a power supply requirement of the air conditioning system in a case of a low voltage ride-through and an off-grid black start. In the case of the low voltage ride-through and the off-grid black start, the power converter converts electric energy of the energy storage apparatus to supply power to the air conditioning system. After a voltage of a power grid is normal or a start is completed, a conversion circuit in the air conditioning system is configured to obtain power from the power grid. Because the power converter works for a very short time, the power converter may use a direct current-to-direct current circuit that has a relatively small rated power and supports a relatively large transient power, to support a low voltage ride-through scenario and an off-grid black start scenario with low costs.

## Description

### TECHNICAL FIELD

This application relates to the field of battery technologies, and in particular, to an energy storage cabinet.

### BACKGROUND

A microgrid is an independent power grid that is not connected to a national grid in some scenarios, for example, in remote areas or on islands. The microgrid is usually equipped with an energy storage apparatus and a power generation apparatus with new energy such as wind energy or solar energy. The energy storage apparatus is disposed in an energy storage cabinet, and an air conditioning system for heat dissipation is also disposed in the energy storage cabinet. Before electric energy stored in the energy storage apparatus is converted into an alternating current and the alternating current is transmitted to a power grid, the air conditioning system needs to be started, to avoid a thermal runaway risk of the energy storage cabinet. Because the air conditioning system obtains power from a power grid side, the air conditioning system cannot work when the power grid is abnormal, for example, during a low voltage ride-through, or when the power grid is not established, for example, during an off-grid black start. Consequently, the energy storage cabinet does not support a low voltage ride-through scenario or an off-grid black start scenario.

### UTILITY MODEL CONTENT

This application provides an energy storage cabinet, to support a low voltage ride-through scenario and an off-grid black start scenario with low costs.

According to a first aspect, an embodiment of this application provides an energy storage cabinet, including an energy storage apparatus, a power conversion system, an air conditioning system, and a power converter. The energy storage apparatus is connected to a power grid by using the power conversion system, the energy storage apparatus is connected to the air conditioning system by using the power converter, and the air conditioning system is connected to the power grid. The air conditioning system includes: a first load, a conversion circuit, and a first power supply loop. The first power supply loop has two power supply input terminals, a first input terminal of the first power supply loop is connected to the conversion circuit, a second input terminal of the first power supply loop is connected to the power converter, and an output terminal of the first power supply loop is connected to the first load. The conversion circuit is connected to the power grid. The conversion circuit is configured to: when a voltage amplitude of the power grid is greater than a specified threshold, convert an alternating current provided by the power grid into a first voltage, and provide the first voltage to the first power supply loop. The power converter is configured to: convert electric energy of the energy storage apparatus into a second voltage, and provide the second voltage to the first power supply loop. The first voltage is greater than the second voltage. In this case, when the power grid is normal, because the first voltage of the first input terminal of the first power supply loop is greater than the second voltage of the second input terminal, the power converter connected to the second input terminal is in a standby state, and the first power supply loop obtains power from the power grid through the conversion circuit. When the power grid is abnormal (that is, during a low voltage ride-through), the conversion circuit connected to the first input terminal is powered off. Consequently, an output of the conversion circuit drops from the first voltage to a voltage less than the second voltage. The first power supply loop obtains power from the energy storage apparatus by using the power converter, so that it can be ensured that the first power supply loop uninterruptedly supplies power to the first load, and the first load is driven by the first power supply loop to uninterruptedly work, thereby ensuring that the air conditioning system continuously cools the energy storage cabinet. In a process of continuous working of the first load, the power conversion system may convert the electric energy of the energy storage apparatus into an alternating current and output the alternating current to the power grid, to maintain a connection between the energy storage cabinet and the power grid during the low voltage ride-through. Alternatively, when the power grid has no power, that is, during an off-grid black start, the first power supply loop directly obtains power from the energy storage apparatus by using the power converter, starts the first load to work, and starts to cool the energy storage cabinet. After the first load works, the power conversion system may be started, converts the electric energy of the energy storage apparatus into an alternating current, and outputs the alternating current to the power grid, to support the off-grid black start.

In this application, the second voltage is provided to the first power supply loop by using the power converter disposed between the energy storage apparatus and the air conditioning system only during the low voltage ride-through or the off-grid black start. After a voltage of the power grid is normal or a start is completed, the first power supply loop obtains power from the power grid through the conversion circuit. Because the power converter works for a very short time, the power converter may use a direct current-to-direct current circuit that has a relatively small rated power and supports a relatively large transient power, to implement a power conversion function of the power converter. In addition, the power converter occupies a relatively small volume, and the power converter may be integrated in a driver & power supply module of the air conditioning system, that is, the power converter and the conversion circuit may be integrated in a same module. Alternatively, the power converter may be disposed outside the air conditioning system, for example, integrated in a module for collecting energy and controlling an energy balance of the energy storage apparatus. An added power converter does not occupy excessive space in the energy storage cabinet.

In some embodiments of this application, the conversion circuit may include a rectifier circuit and a direct current conversion circuit, an input terminal of the rectifier circuit is connected to the power grid, an output terminal of the rectifier circuit is connected to an input terminal of the direct current conversion circuit, and a first output terminal of the direct current conversion circuit is connected to the first input terminal of the first power supply loop. The rectifier circuit is configured to convert, when the power grid is normal, an alternating current provided by the power grid into a high voltage direct current for output. The direct current conversion circuit is configured to convert, when the power grid is normal, the high voltage direct current provided by the rectifier circuit into a first low voltage direct current for output. The power converter is configured to convert high voltage electric energy stored in the energy storage apparatus into a second low voltage direct current for output. A voltage of the first low voltage direct current is greater than a voltage of the second low voltage direct current. In this way, because the power converter converts the high voltage electric energy into the second low voltage direct current for output, energy consumption of the power converter when the power grid is normal and the power converter is in a standby state is reduced.

In some embodiments of this application, the air conditioning system may further include a second load and a second power supply loop, and a second output terminal of the direct current conversion circuit is connected to the second load through the second power supply loop. An output of the conversion circuit is divided into two different direct current power supply loops, that is, the first power supply loop and the second power supply loop. The first power supply loop supplies power to the first load, that is, a primary load. The second power supply loop supplies power to the second load, that is, a non-primary load. A power of the primary load is relatively low, and is generally less than 10% of a power of the entire air conditioning system. Therefore, the added power converter only needs to meet a requirement of a high transient power and a low rated power.

In some embodiments of this application, the first load, that is, the primary load, includes an air conditioner controller, a multi-way valve, a cooling water pump of the power conversion system, and the like. The second load, that is, the non-primary load, includes a cooling water pump of the energy storage apparatus, a fan, and the like. The first power supply loop supplies power to the first load, that is, the primary load, and the second power supply loop supplies power to the second load, that is, the non-primary load. Compared with the second power supply loop, the second input terminal connected to the power converter is added to the first power supply loop. During a grid-disconnection or a low voltage ride-through, the first power supply loop obtains power from the energy storage apparatus by using the power converter, to support the primary load in working, to provide some cooling capabilities, for example, to provide a cooling capability for the power conversion system, and to ensure heat dissipation for the power conversion system. Therefore, the power conversion system is supported in establishing a grid connection between the energy storage apparatus and the power grid. However, because the second power supply loop obtains power from the power grid only through the conversion circuit, during the grid-disconnection or the low voltage ride-through, the voltage of the power grid is insufficient to support the second power supply loop in supplying power to the non-primary load, and the non-primary load stops working.

In some embodiments of this application, the air conditioning system further includes a compressor, the conversion circuit further includes an inverter circuit, an input terminal of the inverter circuit is connected to the output terminal of the rectifier circuit, and an output terminal of the inverter circuit is connected to the compressor. Specifically, the conversion circuit may further convert a direct current provided by the power grid into an alternating current required by the compressor. During the grid-disconnection or the low voltage ride-through, the voltage of the power grid is insufficient to support the conversion circuit in supplying power to the compressor. Therefore, the compressor stops working.

In some other embodiments of this application, the primary load and the non-primary load may not be distinguished between in the air conditioning system, that is, all loads in the air conditioning system, that is, first loads, are powered through the first power supply loop. Specifically, the conversion circuit may include a rectifier circuit, and the first power supply loop includes a direct current conversion circuit. An input terminal of the rectifier circuit is connected to the power grid, an output terminal of the rectifier circuit is connected to an input terminal of the direct current conversion circuit, and an output terminal of the direct current conversion circuit is connected to the first load. An output terminal of the power converter is connected to the input terminal of the direct current conversion circuit. In this way, when the power grid is normal, the conversion circuit may supply power to the first power supply loop, so that all the loads work normally. During an off-grid black start or when a low voltage ride-through occurs on the power grid, switching is performed to the power converter to supply power to the first power supply loop, so that all the loads work normally for a short time. After the power grid is normal, switching is performed to the conversion circuit to supply power to the first power supply loop.

In some other embodiments of this application, the first load includes an air conditioner controller, a multi-way valve, a cooling water pump of the power conversion system, a cooling water pump of the energy storage apparatus, and a fan. During the grid-disconnection or the low voltage ride-through, the first power supply loop obtains power from the energy storage apparatus by using the power converter, to support the foregoing loads in uninterruptedly working, to provide all cooling capabilities, for example, to provide a cooling capability for the power conversion system and the energy storage apparatus, and to ensure heat dissipation for the power conversion system and the energy storage apparatus. Therefore, the power conversion system is supported in establishing a grid connection between the energy storage apparatus and the power grid.

In some other embodiments of this application, the first load may further include a compressor, and the first power supply loop further includes an inverter circuit. An input terminal of the inverter circuit is separately connected to the output terminal of the rectifier circuit and the output terminal of the power converter, and an output terminal of the inverter circuit is connected to the compressor. That is, when the power grid is normal, the inverter circuit may convert a direct current that is output by the rectifier circuit into an alternating current required by the compressor. During the grid-disconnection or the low voltage ride-through, the inverter circuit may convert a direct current provided by the power converter into the alternating current required by the compressor, to ensure that the compressor uninterruptedly works.

In some embodiments of this application, to prevent a circuit from being damaged because the second voltage of the first power supply loop flows back from the first input terminal to the conversion circuit during the off-grid black start or when the low voltage ride-through occurs on the power grid, a first anti-reverse connection circuit may be disposed between the conversion circuit and the first input terminal of the first power supply loop. The first anti-reverse connection circuit may ensure that a current flows unidirectionally from the conversion circuit to the first input terminal of the first power supply loop, that is, may prevent the current from flowing reversely from the first input terminal of the first power supply loop to the conversion circuit.

In some embodiments of this application, to prevent a device from being damaged because the first voltage of the first power supply loop flows back from the second input terminal to the power converter when the power grid is normal, a second anti-reverse connection circuit may be disposed between the output terminal of the power converter and the second input terminal of the first power supply loop. The second anti-reverse connection circuit may ensure that the current flows unidirectionally from the power converter to the second input terminal of the first power supply loop, that is, may prevent the current from flowing reversely from the second input terminal of the first power supply loop to the power converter.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of an architecture of a microgrid system;
FIG. 2 is a diagram of a structure of an energy storage cabinet in a conventional technical solution;
FIG. 3 is a diagram of a structure of an energy storage cabinet according to an embodiment of this application;
FIG. 4 is a diagram of a specific structure of an energy storage cabinet according to an embodiment of this application;
FIG. 5 is a diagram of an actual signal waveform of a water pump in an energy storage cabinet according to an embodiment of this application;
FIG. 6 is a diagram of another structure of an energy storage cabinet according to an embodiment of this application; and
FIG. 7 is a diagram of another specific structure of an energy storage cabinet according to an embodiment of this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe particular embodiments, but are not intended to limit this application. The terms "one", "a", "the", "the foregoing", "this", and "the one" in singular forms used in this specification and the appended claims of this application are also intended to include expressions such as "one or more", unless otherwise specified in the context clearly.

Reference to "one embodiment", "some embodiments", or the like described in this specification means that a particular feature, structure, or characteristic described with reference to one or more embodiments is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, same reference numerals in the figures represent same or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

The following describes some terms in embodiments of this application, to facilitate understanding of a person skilled in the art.

Primary load: A component such as an air conditioner controller in an air conditioning system, a cooling water pump of a PCS, and a multi-way valve.

Non-primary load: A component such as a fan in the air conditioning system and a cooling water pump in an energy storage apparatus.

Black start: An energy storage cabinet is started to generate power to the outside and to be grid-connected when no external power supply is available.

Grid connection: Power generated by a power generation apparatus with new energy, for example, a photovoltaic panel, or an energy storage cabinet is grid-connected before being transmitted and used.

Grid disconnection: The power generation apparatus with new energy, for example, a photovoltaic panel, is off-grid.

Low voltage ride-through: A voltage of the power grid temporarily drops, to be specific, a voltage amplitude of the power grid drops to a value less than a specified threshold.

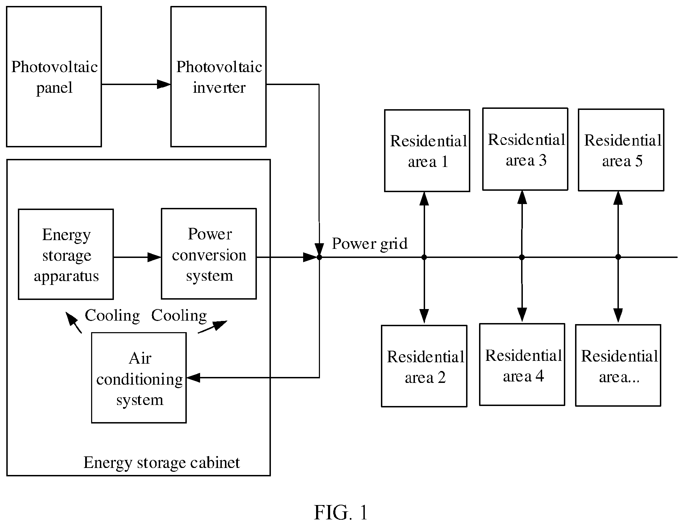

As shown in FIG. 1, in a microgrid system, a power generation apparatus with new energy, for example, a photovoltaic panel, and an energy storage cabinet are usually configured, and a photovoltaic inverter is configured to: convert electric energy of the photovoltaic panel into an alternating current and output the alternating current to a power grid. An energy storage apparatus, a power conversion system (power conversion system, PCS), and an air conditioning system are disposed in the energy storage cabinet. The PCS is configured to: convert electric energy stored in the energy storage apparatus into an alternating current and output the alternating current to the power grid. The air conditioning system is configured to dissipate heat of the energy storage apparatus and the PCS after obtaining power from the power grid and performing cooling, thereby preventing a thermal runaway of the energy storage cabinet.

When the power generation apparatus with new energy, for example, a photovoltaic panel, generates no power, the energy storage cabinet needs to generate power and be grid-connected for establishment of the power grid. In this case, to start the energy storage cabinet, in other words, to perform an off-grid black start, the air conditioning system in the energy storage cabinet needs to be started first, to prevent the energy storage cabinet from failing due to a thermal runaway. However, in this case, because no power grid is established, the air conditioning system cannot obtain power from the power grid. Consequently, the air conditioning system cannot run, and a requirement interlock is formed.

When the low voltage ride-through occurs on the power grid, to prevent a fault on the power grid from spreading, the energy storage cabinet needs to be connected to the power grid to support the power grid in recovering to be normal. Therefore, the PCS in the energy storage cabinet needs to maintain working during the low voltage ride-through. This requires the air conditioning system to provide a cooling capability within a short time to ensure heat dissipation for normal running of the PCS. Similarly, under such a working condition, there is an interlock between inability of the air conditioning system to obtain power from the power grid and a running requirement of the air conditioning system, causing the air conditioning system to fail to run normally.

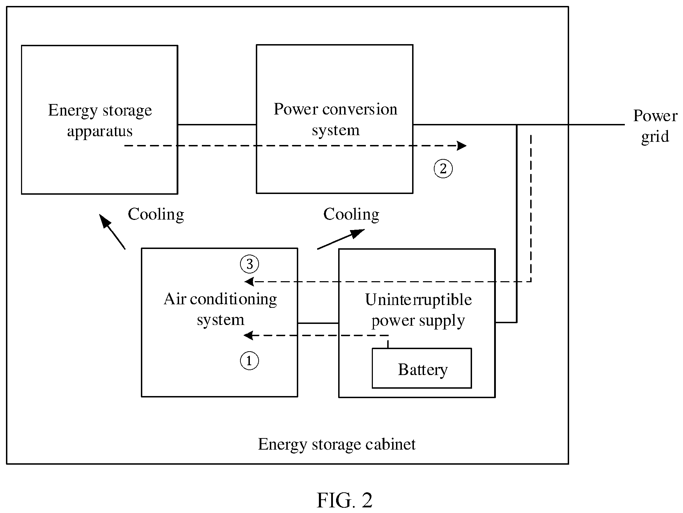

Therefore, to resolve a problem of the requirement interlock in an off-grid black start scenario and a low voltage ride-through scenario, as shown in FIG. 2, in a conventional technical solution, an uninterruptible power supply (uninterruptible power supply, UPS) is usually configured in the energy storage cabinet, and a battery is usually configured in the UPS. At an initial moment at which the energy storage cabinet is grid-connected, the battery in the UPS supplies power to the air conditioning system, that is, a loop ①. The air conditioning system is powered on and normally works to cool the energy storage apparatus and the PCS. Then, the PCS is powered on to work, and a voltage grid connection between the energy storage apparatus and the power grid is established, that is, a loop ②. After the grid connection, the UPS enters a bypass mode, the loop ① stops supplying power, and the air conditioning system obtains power from the power grid, that is, a loop ③.

To meet a requirement for normal running of the air conditioning system in the grid-disconnection scenario and the low voltage ride-through scenario, if the UPS and the battery in the UPS are configured in the energy storage cabinet, a volume of the energy storage cabinet is increased and costs are increased. In addition, the battery in the UPS also needs to be frequently maintained, and reliability is relatively low.

To overcome the disadvantage of the conventional technical solution, this application provides an energy storage cabinet. An additional power converter with a low power is added between an energy storage apparatus and an air conditioning system, to meet a power supply requirement of the air conditioning system in a case of a low voltage ride-through and an off-grid black start. In other words, in the case of the low voltage ride-through and the off-grid black start, the power converter converts electric energy of the energy storage apparatus to supply power to the air conditioning system, to support a low voltage ride-through scenario and an off-grid black start scenario with low costs.

The following describes the energy storage cabinet provided in this application with reference to accompanying drawings.

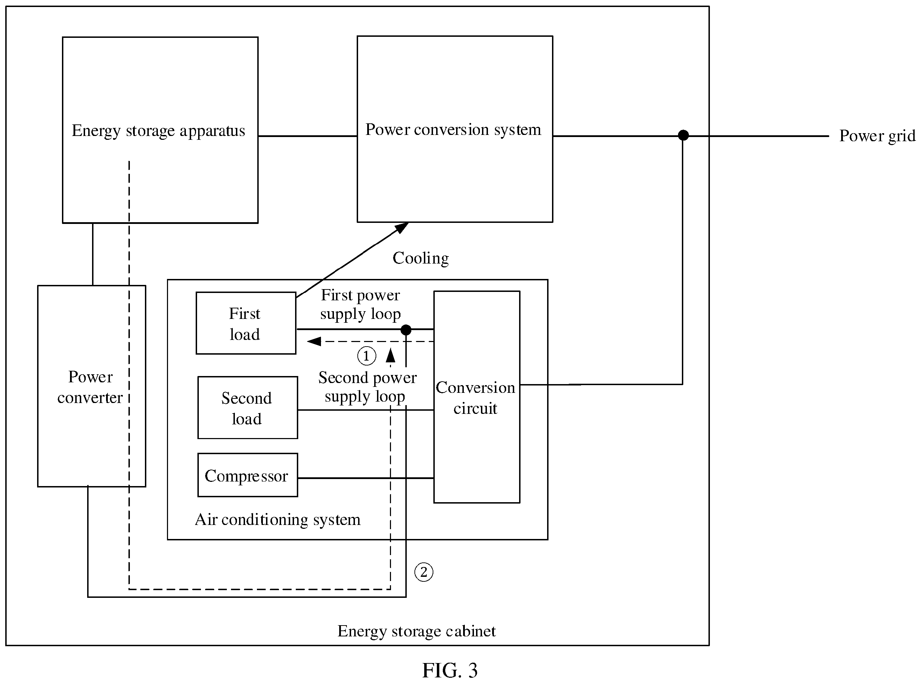

FIG. 3 is an example of a diagram of a structure of an energy storage cabinet according to an embodiment of this application.

As shown in FIG. 3, in this embodiment of this application, the energy storage cabinet may specifically include an energy storage apparatus, a power conversion system, an air conditioning system, and a power converter. The energy storage apparatus is connected to a power grid by using the power conversion system, the energy storage apparatus is connected to the air conditioning system by using the power converter, and the air conditioning system is connected to the power grid. The air conditioning system includes: a first load, a conversion circuit, and a first power supply loop. The first power supply loop has two power supply input terminals, a first input terminal ① of the first power supply loop is connected to the conversion circuit, a second input terminal ② of the first power supply loop is connected to the power converter, and an output terminal of the first power supply loop is connected to the first load. The conversion circuit is connected to the power grid. The conversion circuit is configured to: when a voltage amplitude of the power grid is greater than a specified threshold, in other words, the power grid is normal, convert an alternating current provided by the power grid into a first voltage, and provide the first voltage to the first power supply loop. The power converter is configured to: convert electric energy of the energy storage apparatus into a second voltage, and provide the second voltage to the first power supply loop. The second voltage is less than the first voltage. In this case, when the power grid is normal, because the first voltage of the first input terminal ① of the first power supply loop is greater than the second voltage of the second input terminal ②, the power converter connected to the second input terminal ② is in a standby state, and the first power supply loop obtains power from the power grid through the conversion circuit. When the power grid is abnormal (in other words, during a low voltage ride-through), the conversion circuit connected to the first input terminal ① is powered off. Consequently, an output of the conversion circuit drops from the first voltage to a voltage less than the second voltage. The first power supply loop obtains power from the energy storage apparatus by using the power converter, so that it can be ensured that the first power supply loop uninterruptedly supplies power to the first load, and the first load is driven by the first power supply loop to uninterruptedly work, thereby ensuring that the air conditioning system continuously cools the energy storage cabinet. In a process of continuous working of the first load, the power conversion system may convert the electric energy of the energy storage apparatus into an alternating current and output the alternating current to the power grid, to maintain a connection between the energy storage cabinet and the power grid during the low voltage ride-through. Alternatively, when the power grid has no power, in other words, during an off-grid black start, the first power supply loop directly obtains power from the energy storage apparatus by using the power converter, starts the first load to work, and starts to cool the energy storage cabinet. After the first load works, the power conversion system may be started, converts the electric energy of the energy storage apparatus into an alternating current, and outputs the alternating current to the power grid, to support the off-grid black start.

In this application, the second voltage is provided to the first power supply loop by using the power converter disposed between the energy storage apparatus and the air conditioning system only during the low voltage ride-through or the off-grid black start. After a voltage of the power grid is normal or a start is completed, the first power supply loop obtains power from the power grid through the conversion circuit. Because the power converter works for a very short time, the power converter may use a direct current-to-direct current circuit (DC/DC) that has a relatively small rated power and supports a relatively large transient power, to implement a power conversion function of the power converter. In addition, the power converter occupies a relatively small volume, and the power converter may be integrated in a driver & power supply module of the air conditioning system, that is, the power converter and the conversion circuit may be integrated in a same module. Alternatively, the power converter may be disposed outside the air conditioning system, for example, integrated in a module for collecting energy and controlling an energy balance of the energy storage apparatus. An added power converter does not occupy excessive space in the energy storage cabinet.

### Embodiment 1

As shown in FIG. 3, in this embodiment, direct current loads in an air conditioning system may be classified into a primary load and a non-primary load. The primary load, that is, a first load, may specifically include components such as an air conditioner controller, a cooling water pump of a power conversion system, and a multi-way valve. The non-primary load, that is, a second load, may include components such as a fan and a cooling water pump of an energy storage apparatus. The air conditioner controller may provide drive signals to components such as the cooling water pump, the fan, and the multi-way valve in the air conditioning system, to control working statuses of the components. The multi-way valve is configured to connect a plurality of pipes in the air conditioning system. The multi-way valve may include a three-way valve, a four-way valve, and the like. A water flow path in the pipe may be changed by changing a status of a valve plug of the multi-way valve. A plurality of fans may be disposed in the air conditioning system, for example, a fan exhausting air to the energy storage apparatus, a fan exhausting air to the power conversion system, and a dehumidification fan. An output of a conversion circuit may be divided into two different direct current power supply loops, that is, a first power supply loop and a second power supply loop. The first power supply loop supplies power to the primary load. The second power supply loop supplies power to the non-primary load. A power of the primary load is relatively low, and is generally less than 10% of a power of the entire air conditioning system. Therefore, the added power converter only needs to meet a requirement of a high transient power and a low rated power. Compared with the second power supply loop, a second input terminal ② connected to the power converter is added to the first power supply loop. During a grid-disconnection or a low voltage ride-through, the first power supply loop obtains power from the energy storage apparatus by using the power converter, to support the primary load in working, to provide some cooling capabilities, for example, to provide a cooling capability for the power conversion system, and to ensure heat dissipation for the power conversion system. Therefore, the power conversion system is supported in establishing a grid connection between the energy storage apparatus and a power grid. However, because the second power supply loop obtains power from the power grid only through the conversion circuit, during the grid-disconnection or the low voltage ride-through, a voltage of the power grid is insufficient to support the second power supply loop in supplying power to the non-primary load, and the non-primary load stops working. In addition, the air conditioning system may further include an alternating current load, that is, a compressor. The conversion circuit may further convert a direct current provided by the power grid into an alternating current required by the compressor. During the grid-disconnection or the low voltage ride-through, the voltage of the power grid is insufficient to support the conversion circuit in supplying power to the compressor. Therefore, the compressor stops working.

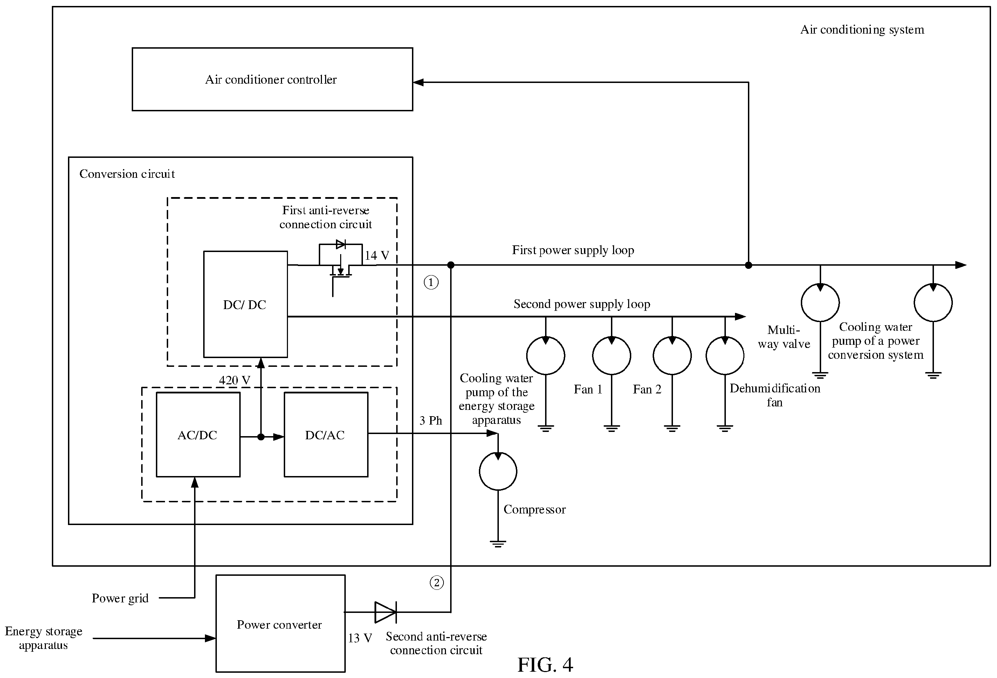

As shown in FIG. 4, in this embodiment, the conversion circuit may specifically include a rectifier circuit (AC/DC), a direct current conversion circuit (DC/DC), and an inverter circuit (DC/AC). An input terminal of the rectifier circuit is connected to the power grid, and an output terminal of the rectifier circuit is separately connected to an input terminal of the direct current conversion circuit and an input terminal of the inverter circuit. The rectifier circuit is configured to convert, when the power grid is normal, an alternating current provided by the power grid into a high voltage direct current for output. For example, the rectifier circuit converts a 220 V alternating current into a 420 V high voltage direct current for output. A first output terminal of the direct current conversion circuit is connected to the first input terminal ① of the first power supply loop, and a second output terminal of the direct current conversion circuit is connected to a second load through the second power supply loop. The direct current conversion circuit is configured to convert, when the power grid is normal, the high voltage direct current provided by the rectifier circuit into a low voltage direct current for output. For example, the direct current conversion circuit converts a 420 V high voltage direct current into a 14 V low voltage direct current for output. An output terminal of the power converter is connected to the second input terminal ② of the first power supply loop, and the power converter is configured to convert high voltage electric energy stored in the energy storage apparatus into a low voltage direct current for output. For example, the power converter converts 800 V high voltage electric energy of the energy storage apparatus into 13 V low voltage direct current for output. In this way, because the power converter converts the high voltage electric energy into the low voltage direct current for output, energy consumption of the power converter when the power grid is normal and the power converter is in a standby state is reduced. An output terminal of the inverter circuit is connected to the compressor, and the inverter circuit is configured to convert, when the power grid is normal, the high voltage direct current provided by the rectifier circuit into an alternating current for output.

In this embodiment, to prevent a circuit from being damaged because a second voltage of the first power supply loop flows back from the first input terminal ① to the direct current conversion circuit (also referred to as a backflow phenomenon) during an off-grid black start or when the low voltage ride-through occurs on the power grid, a first anti-reverse connection circuit (an oring circuit) may be disposed between the first output terminal of the direct current conversion circuit and the first input terminal ① of the first power supply loop. The first anti-reverse connection circuit may ensure that a current flows unidirectionally from the conversion circuit to the first input terminal ① of the first power supply loop, that is, may prevent the current from flowing reversely from the first input terminal ① of the first power supply loop to the conversion circuit. For example, the first anti-reverse connection circuit may specifically use a switching transistor and a diode that are connected in parallel, to implement a function of the first anti-reverse connection circuit.

In this embodiment, to prevent a device from being damaged because a first voltage of the first power supply loop flows back from the second input terminal ② to the power converter when the power grid is normal, a second anti-reverse connection circuit (an oring circuit) may be disposed between the output terminal of the power converter and the second input terminal ② of the first power supply loop. The second anti-reverse connection circuit may ensure that the current flows unidirectionally from the power converter to the second input terminal ② of the first power supply loop, that is, may prevent the current from flowing reversely from the second input terminal ② of the first power supply loop to the power converter. For example, the second anti-reverse connection circuit may specifically use a diode, to implement a function of the second anti-reverse connection circuit.

In this embodiment, working statuses of the power grid under different working conditions are as follows:
Phase 1: When a 220 V alternating current voltage of the power grid normally supplies power, the first voltage of the first input terminal ① of the first power supply loop is greater than the second voltage of the second input terminal ②, the direct current conversion circuit connected to the first input terminal ① supplies power to the first power supply loop, the second input terminal ② is not conducted, and the power converter connected to the second input terminal ② is in a standby state. The direct current conversion circuit supplies power to the primary load and the non-primary load respectively by using the first power supply loop and the second power supply loop, the inverter circuit supplies power to the compressor, all loads in the air conditioning system work, and the air conditioning system provides all cooling and heat dissipation functions.
Phase 2: During the off-grid black start or when the low voltage ride-through occurs on the power grid, the 220 V alternating current voltage of the power grid is powered off, a voltage of the first input terminal ① of the first power supply loop drops from the first voltage to 0 V, the voltage of the first input terminal ① is lower than the second voltage of the second input terminal ②, the second input terminal ② starts to supply power to the first power supply loop, and the first input terminal ① is powered off. In this case, only the first power supply loop supplies power to the primary load, the non-primary load and the compressor in the air conditioning system stop working, and only the primary load works. The air conditioning system may provide some cooling and heat dissipation functions.
Phase 3: After the start succeeds or the low voltage ride-through on the power grid is completed, the power grid establishes a 220 V alternating current voltage, the first voltage of the first input terminal ① of the first power supply loop is greater than the second voltage of the second input terminal ②, the direct current conversion circuit connected to the first input terminal ① starts to supply power to the first power supply loop, the second input terminal ② is not conducted, and the power converter connected to the second input terminal ② recovers to be in a standby state. The direct current conversion circuit supplies power to the primary load and the non-primary load respectively by using the first power supply loop and the second power supply loop, the inverter circuit supplies power to the compressor, all loads in the air conditioning system work, and the air conditioning system provides all cooling and heat dissipation functions.

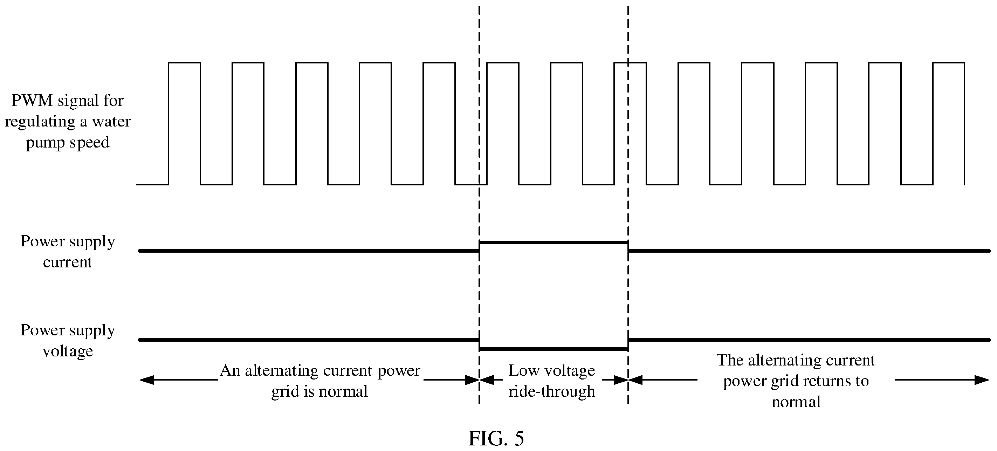

As shown in FIG. 5, the cooling water pump in the power conversion system in the air conditioning system is used as an example to test actual signal waveforms corresponding to the foregoing three phases. In the phase 1, the direct current conversion circuit provides the first voltage to the first input terminal ① of the first power supply loop, a power supply voltage of the water pump is 14 V, and the water pump may run normally. In the phase 2, switching is performed to the power converter, to provide the second voltage to the second input terminal ② of the first power supply loop, the power supply voltage of the water pump is 13 V, and the water pump can run normally. In the phase 3, switching is performed to the direct current conversion circuit, to provide the first voltage to the first input terminal ① of the first power supply loop, the power supply voltage of the water pump is 14 V, and the water pump may run normally.

### Embodiment 2:

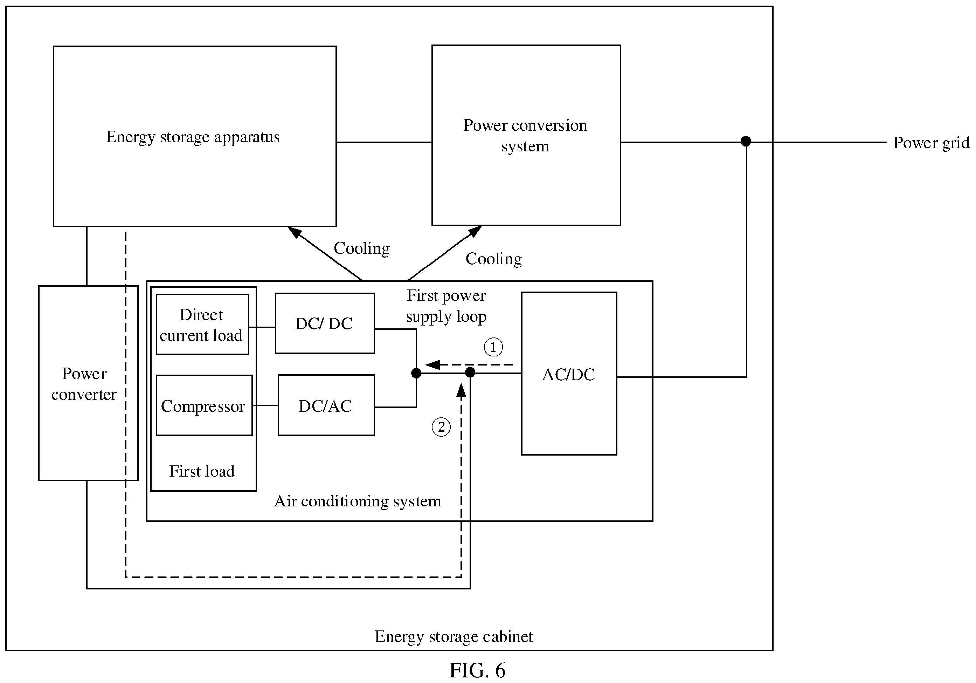

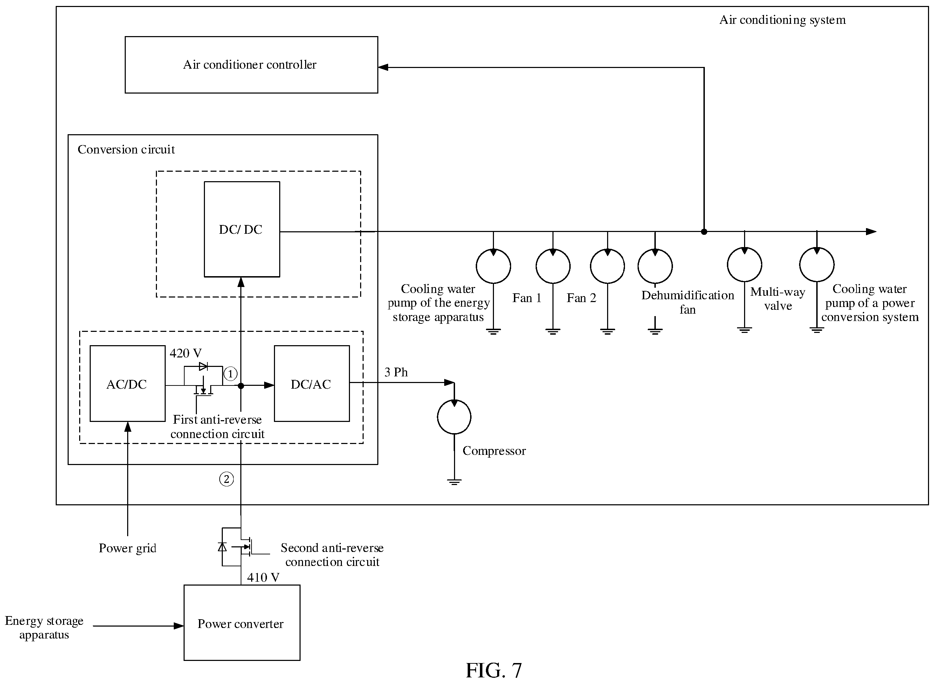

As shown in FIG. 6 and FIG. 7, in this embodiment, a primary load and a non-primary load may not be distinguished between in an air conditioning system, that is, all loads in the air conditioning system, that is, first loads, are powered through a first power supply loop. The first load includes direct current loads such as an air conditioner controller, a multi-way valve, a cooling water pump of a power conversion system, a cooling water pump of an energy storage apparatus, and a fan, and an alternating current load, for example, a compressor. When a power grid is normal, a conversion circuit may supply power to the first power supply loop, so that all loads work normally. During an off-grid black start or when a low voltage ride-through occurs on the power grid, switching is performed to a power converter to supply power to the first power supply loop, so that all loads work normally for a short time. After the power grid is normal, switching is performed to the conversion circuit to supply power to the first power supply loop.

As shown in FIG. 6 and FIG. 7, in this embodiment, the conversion circuit may specifically include a rectifier circuit (AC/DC), and the first power supply loop includes a direct current conversion circuit (DC/DC) and an inverter circuit (DC/AC). An input terminal of the rectifier circuit is connected to the power grid, and an output terminal of the rectifier circuit is connected to a first input terminal ① of a high voltage bus. The rectifier circuit is configured to convert, when the power grid is normal, an alternating current provided by the power grid into a high voltage direct current for output. For example, the rectifier circuit converts a 220 V alternating current into a 420 V high voltage direct current for output. A second input terminal ② is disposed on the high voltage bus, and is connected to an output terminal of the power converter. The power converter is configured to convert high voltage electric energy stored in the energy storage apparatus into a high voltage direct current for output. For example, the power converter converts 800 V high voltage electric energy of the energy storage apparatus into a 410 V high voltage direct current for output. An output terminal of the high voltage bus is separately connected to an input terminal of the direct current conversion circuit and an input terminal of the inverter circuit. When the power grid is normal, the high voltage bus outputs the high voltage direct current provided by the rectifier circuit. During a grid-disconnection or a low voltage ride-through, the high voltage bus outputs the high voltage direct current provided by the power converter. An output terminal of the direct current conversion circuit is connected to a direct current load. The direct current conversion circuit is configured to convert the high voltage direct current provided by the high voltage bus into a low voltage direct current for output. For example, the direct current conversion circuit converts a 420 V or 410 V high voltage direct current into a 14 V low voltage direct current for output. An output terminal of the inverter circuit is connected to the compressor. The inverter circuit is configured to convert the high voltage direct current provided by the high voltage bus into an alternating current for output. For example, the inverter circuit converts a 420 V or 410 V high voltage direct current into an alternating current for output.

In this embodiment, to prevent a circuit from being damaged because a second voltage transmitted on the high voltage bus flows back from the first input terminal ① to the rectifier circuit during the off-grid black start or when the low voltage ride-through occurs on the power grid, a first anti-reverse connection circuit (an oring circuit) may be disposed between the output terminal of the rectifier circuit and the high voltage bus. For example, the first anti-reverse connection circuit may specifically use a switching transistor and a diode that are connected in parallel, to implement a function of the first anti-reverse connection circuit.

In this embodiment, to prevent a device from being damaged because a first voltage transmitted on the high voltage bus flows back from the second input terminal ② to the power converter when the power grid is normal, a second anti-reverse connection circuit (an oring circuit) may be disposed between the output terminal of the power converter and the high voltage bus. For example, the second anti-reverse connection circuit may specifically use a switching transistor and a diode that are connected in parallel, to implement a function of the second anti-reverse connection circuit.

In this embodiment, working statuses of the power grid under different working conditions are as follows:
Phase 1: When a 220 V alternating current voltage of the power grid normally supplies power, a first voltage of the first input terminal ① of the first power supply loop is greater than a second voltage of the second input terminal ②, the rectifier circuit connected to the first input terminal ① supplies power to the high voltage bus, the second input terminal ② is not conducted, and the power converter connected to the second input terminal ② is in a standby state. The direct current conversion circuit supplies power to all direct current loads, the inverter circuit supplies power to the compressor, all loads in the air conditioning system work, and the air conditioning system provides all cooling and heat dissipation functions.
Phase 2: During the off-grid black start or when the low voltage ride-through occurs on the power grid, the 220 V alternating current voltage of the power grid is powered off, a voltage of the first input terminal ① of the first power supply loop drops from the first voltage to 0 V, the voltage of the first input terminal ① is lower than the second voltage of the second input terminal ②, the second input terminal ② starts to supply power to the high voltage bus, and the first input terminal ① is powered off. The direct current conversion circuit supplies power to all direct current loads, the inverter circuit supplies power to the compressor, all loads in the air conditioning system work, and the air conditioning system provides all cooling and heat dissipation functions.
Phase 3: After the start succeeds or the low voltage ride-through on the power grid is completed, the power grid establishes a 220 V alternating current voltage, the first voltage of the first input terminal ① of the first power supply loop is greater than the second voltage of the second input terminal ②, the rectifier circuit connected to the first input terminal ① starts to supply power to the first power supply loop, the second input terminal ② is not conducted, and the power converter connected to the second input terminal ② recovers to be in a standby state. The direct current conversion circuit supplies power to all direct current loads, the inverter circuit supplies power to the compressor, all loads in the air conditioning system work, and the air conditioning system provides all cooling and heat dissipation functions.

Based on the energy storage cabinet provided in this embodiment of this application, an additional power converter is added between the energy storage apparatus and the air conditioning system, to meet a power supply requirement of the air conditioning system in a case of the low voltage ride-through and the off-grid black start. In the case of the low voltage ride-through and the off-grid black start, the power converter converts electric energy of the energy storage apparatus to supply power to the air conditioning system. After a voltage of the power grid is normal or the start is completed, the conversion circuit in the air conditioning system is configured to obtain power from the power grid. Because the power converter works for a very short time, the power converter may use a direct current-to-direct current circuit that has a relatively small rated power and supports a relatively large transient power, to support a low voltage ride-through scenario and an off-grid black start scenario with low costs.

It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. An energy storage cabinet, comprising: an energy storage apparatus, a power conversion system, an air conditioning system, and a power converter, wherein
the energy storage apparatus is connected to a power grid by using the power conversion system, the energy storage apparatus is connected to the air conditioning system by using the power converter, and the air conditioning system is connected to the power grid;
the air conditioning system comprises: a first load, a conversion circuit, and a first power supply loop, wherein a first input terminal of the first power supply loop is connected to the conversion circuit, a second input terminal of the first power supply loop is connected to the power converter, an output terminal of the first power supply loop is connected to the first load, and the conversion circuit is connected to the power grid;
the conversion circuit is configured to: when a voltage amplitude of the power grid is greater than a specified threshold, convert an alternating current provided by the power grid into a first voltage, and provide the first voltage to the first power supply loop;
the power converter is configured to: convert electric energy of the energy storage apparatus into a second voltage, and provide the second voltage to the first power supply loop, wherein the first voltage is greater than the second voltage;
the first load is driven by the first power supply loop to work; and
the power conversion system is configured to: after the first load works, convert the electric energy of the energy storage apparatus into an alternating current, and output the alternating current to the power grid.

2. The energy storage cabinet according to claim 1, wherein the conversion circuit comprises a rectifier circuit and a direct current conversion circuit, an input terminal of the rectifier circuit is connected to the power grid, an output terminal of the rectifier circuit is connected to an input terminal of the direct current conversion circuit, and a first output terminal of the direct current conversion circuit is connected to the first input terminal of the first power supply loop.

3. The energy storage cabinet according to claim 2, wherein the air conditioning system further comprises: a second load and a second power supply loop, and a second output terminal of the direct current conversion circuit is connected to the second load through the second power supply loop.

4. The energy storage cabinet according to claim 3, wherein the first load comprises: an air conditioner controller, a multi-way valve, and a cooling water pump of the power conversion system; and
the second load comprises a cooling water pump of the energy storage apparatus and a fan.

5. The energy storage cabinet according to any one of claims 2 to 4, wherein the air conditioning system further comprises a compressor, the conversion circuit further comprises an inverter circuit, an input terminal of the inverter circuit is connected to the output terminal of the rectifier circuit, and an output terminal of the inverter circuit is connected to the compressor.

6. The energy storage cabinet according to claim 1, wherein the conversion circuit comprises a rectifier circuit, and the first power supply loop comprises a direct current conversion circuit;
an input terminal of the rectifier circuit is connected to the power grid, an output terminal of the rectifier circuit is connected to an input terminal of the direct current conversion circuit, and an output terminal of the direct current conversion circuit is connected to the first load; and
an output terminal of the power converter is connected to the input terminal of the direct current conversion circuit.

7. The energy storage cabinet according to claim 6, wherein the first load comprises: an air conditioner controller, a multi-way valve, a cooling water pump of the power conversion system, a cooling water pump of the energy storage apparatus, and a fan.

8. The energy storage cabinet according to claim 6 or 7, wherein the first load further comprises a compressor, and the first power supply loop further comprises an inverter circuit; and
an input terminal of the inverter circuit is separately connected to the output terminal of the rectifier circuit and the output terminal of the power converter, and an output terminal of the inverter circuit is connected to the compressor.

9. The energy storage cabinet according to claim 1, 2, 3, 4, 6, or 7, wherein the air conditioning system further comprises a first anti-reverse connection circuit disposed between the conversion circuit and the first input terminal of the first power supply loop, and the first anti-reverse connection circuit is configured to ensure that a current flows unidirectionally from the conversion circuit to the first input terminal of the first power supply loop.

10. The energy storage cabinet according to claim 1, 2, 3, 4, 6, or 7, further comprising: a second anti-reverse connection circuit disposed between the power converter and the second input terminal of the first power supply loop, wherein the second anti-reverse connection circuit is configured to ensure that a current flows unidirectionally from the power converter to the second input terminal of the first power supply loop.
